# EUROPÄISCHE PATENTSCHRIFT

(11) **EP 0 695 899 B1**
(45) Veröffentlichungstag und Bekanntmachung des Hinweises auf die Patenterteilung: **20.09.2000**
(21) Anmeldenummer: 95110220.1
(22) Anmeldetag: 30.06.1995
(51) Int. Cl.: F16J 15/20

(54) **Stopfbuchspackung**
Stuffing-box packing
Garniture de presse-étoupe

(30) Priorität: 01.07.1994 DE 4423043
(43) Veröffentlichungstag der Anmeldung: 07.02.1996
(73) Patentinhaber: DEUTSCHE INSTITUTE FÜR TEXTIL- UND FASERFORSCHUNG STUTTGART Institut für Textil- und Verfahrenstechnik, 73770 Denkendorf (DE)
(72) Erfinder: Ehrler, Peter, Dr., D-72766 Reutlingen (DE); Scherieble, Georg, D-72760 Reutlingen (DE); Stauch, Günther, D-72631 Aichtal (DE); Gundisch, Werner, D-73734 Esslingen (DE)
(74) Vertreter: Canzler, Rolf, Dipl.-Ing.

(56) Entgegenhaltungen:
- EP-A- 0 585 783
- GB-A- 796 610
- US-A- 3 878 031

## Beschreibung

Die Erfindung betrifft eine Vorrichtung zum Abdichten bewegter Teile, wie beispielsweise einer Welle, mittels einer Stopfbuchspackung gemäß dem Oberbegriff des Anspruchs 1 sowie ein Verfahren zur Herstellung der als Packung verwendeten Dichtkörper.

Stopfbuchspackungen bestehen in der Regel aus speziellen Schnur- oder Geflechtringen, sowie auch aus Ringen oder Ringscheiben aus Kunststoff, Kohle, Graphit, Metall oder auch verschiedenen Granulatschichten, die zwischen die Welle und der entsprechenden Gehäusewandung in einem Ringraum angeordnet sind und über die sog. Stoffbuchsbrille sowohl gegen die Welle, als auch gegen die Gehäusewand gepreßt werden, wodurch die Abdichtung erreicht wird. Ein Verfahren und eine Vorrichtung zum Abdichten bewegter Teile durch Stopfbuchsen wird beispielsweise in der DE-PS 34 45 805 beschrieben.

Bei einer solchen Stopfbuchsenabdichtung kommt es darauf an, daß sie in Verbindung mit einer kontrollierten Leckage dichtend wirkt. Die Anforderungen an eine solche Stopfbuchsendichtung sind jedoch wegen zahlreicher kritischer Randbedingungen, wie Temperatur, Mediumdruck und Mediumeigenschaften, sehr unterschiedlich. Neben mechanischer Beständigkeit wird oftmals auch chemische und thermische Beständigkeit gefordert. Nachdem der Universalpackungswerkstoff Asbest nicht mehr eingesetzt werden soll, verbleiben im wesentlichen textile Standard- und Spezialfasern, aus denen Packungen in Form von Geflechtsschnüren hergestellt werden. Es ist auch bekannt, Packungsgeflechte aus speziellen Polytetrafluoräthylen-Fasergarnen, aus Aramidfasergarnen sowie auch aus Graphit-, Kohle- oder Silicat-Fasergarnen und Verbindungen aus diesen Fasern herzustellen. Diese bis jetzt für Packungsgeflechte profilierten organischen Fasern müssen für das Flechten von Packungsschnüren in Form von Garnen eingesetzt werden. Die Herstellung derartiger Spezialgarne ist jedoch mit Schwierigkeiten verbunden und bereitet einen erhöhten Aufwand. Die Eigenschaften der daraus hergestellten Stopfbuchspackungen genügen außerdem nicht allen Anforderungsprofilen und sind auf der anderen Seite bei Anwendungen ohne besondere Anforderungen gewöhnlich überqualifiziert und dadurch unverhältnismäßig teuer.

Ein anderes Problem bei Stopfbuchspackungen ist, daß für die Abdichtung gegenüber dem Mediumdruck eine ziemlich starke Pressung der Packung notwendig ist, was wiederum ein Bremsen der umlaufenden Welle und damit Energieverlust bedeutet.

Durch die britische Patentschrift 796610 ist Dichtungsmaterial bekannt, welches korrosions- und hitzebeständig ist und aus textilem Material in Form von Web- oder non-woven-Stoff, als Geflecht oder auch Filz einschließlich Nadelfilz hergestellt sein kann. Dabei wird das textile Material mit einer Dispersion imprägniert, welche PTFE-Gewichtsanteile enthält. Es werden Flanschdichtungen als auch Stoffbuchspackungen beschrieben, wobei für Stopfbuchspackungen ausdrücklich Schnüre aus Geflecht oder ähnliches vorgeschlagen werden, so daß die oben bereits geschilderten Nachteile nach diesem bekannten Vorschlag nicht behoben werden können.

Aufgabe der vorliegenden Erfindung ist es, eine Stopfbuchspackung zu schaffen, die nicht nur gute Dichteigenschaften, sondern auch gute Gleiteigenschaft aufweist und dadurch verschleißfest ist und geringe Reibungs- und Energieverluste aufweist. Diese Aufgabe wird durch die Merkmale des Anspruchs 1 gelöst.

Die Erfindung beruht auf der Erkenntnis, daß die mit der Welle in Berührung kommende Fläche der Stopfbuchspackung eben und unstrukturiert sein muß, wie sie beispielsweise durch die Schnittfläche einer geschnittenen Textil- oder Schaumstoffbahn gegeben ist. Es kann so auch ein hoher PTFE-Anteil eingelagert und zur Wirkung gebracht werden, so daß gute Gleiteigenschaften und damit geringe Reibungs- und Energieverluste erzielt werden können.

Durch die erfindungsgemäße Stopfbuchsenpackung werden bei identischen Einsatzbedingungen wesentlich bessere Gleit- und Dichteigenschaften gegenüber den bekannten Packungsgeflechten erreicht. Auch ist der Herstellungsaufwand wesentlich geringer. Dadurch, daß der Dichtkörper 1 aus Ringscheiben zusammengesetzt ist, lassen sich alle gewünschten Stärken und Abmessungen des Dichtkörpers 1 auf einfache Weise zusammenstellen. Zur Verbesserung der Anlage des Dichtkörpers 1 an der Welle weist dieser einen trapezförmigen Querschnitt auf, wobei die kürzere Trapezseite an dem bewegten Teil anliegt. Auch können mehrere trapezförmige Dichtkörper 1 in den Ringspalt eingelegt werden, so daß sich eine Art Drosselwirkung zwischen den einzelnen keilförmigen Abschnitten ergibt. Je nach dem Einsatzgebiet ist der Dichtkörper 1 aus verschiedenen Faserwerkstoffen zusammengesetzt. Weitere Einzelheiten der Erfindung werden anhand der Zeichnungen beschrieben.

Es zeigen:
- Fig. 1: den Dichtkörper in der Draufsicht,
- Fig. 2: den Dichtkörper im Schnitt gemäß Fig. 1,
- Fig. 3: einen zusammengesetzten Dichtkörper,
- Fig. 4: eine Preßeinrichtung zur Herstellung der Dichtkörper.

Aus einer Stoffbahn werden ringförmige Scheiben 11, 12, 13, herausgeschnitten, vorzugsweise ausgestanzt. Die Stoffbahn besteht vorzugsweise aus Nadelfilz, da sich Nadelfilzstoffbahnen nicht nur sehr wirtschaftlich herstellen lassen, sondern in Verbindung mit einem eingebauten Trägergewebe auch sehr variabel, d.h. eng angepaßt an die anwendungstechnischen Anforderungen hergestellt werden können. Nadelfilze können aus allen beliebigen textilen Fasern hergestellt werden. Vorzugsweise werden Nadelfilze mit einem Flächengewicht zwischen 400 g bis 3000 g pro m² und einer Dicke von 1 mm bis 10 mm für die Dichtkörper 1 verwendet. Die Rohdichte soll mindestens 0,1 g pro cm³, vorzugsweise jedoch etwa 0,3 g pro cm³ betragen.

Anstelle von Filz können auch andere textile Flächengebilde oder auch Schaumstoffe verwendet werden. Bedingungen sind: Der Textilstoff oder Schaumstoff muß bei ausreichend hoher Porosität relativ hart und dennoch elastisch kompressibel sein, und die Poren müssen ineinander übergehen, damit Wirkstoff aus dem Inneren des Dichtkörpers 1 an die mit der Welle in Berührung kommende Oberfläche nachgeliefert werden kann. Schaumstoffe können nur dann verwendet werden, wenn es sich um einen offenzelligen Schaum handelt.

Bei textilen Flächengebilden kommen beispielsweise Vliesstoff, Maschenstoff, Nähwirkstoff oder auch Gewebe in Frage. Maßgebend für die Auswahl ist ein möglichst großer Porenanteil, der bei wenigstens 50 % liegen soll. Damit wird eine hohe Wirkstoff-Partikel-Einlagerung ermöglicht, die auf jeden Fall mehr als 35 %, bezogen auf das Gewicht des fertigen Dichtkörper 1, betragen soll. Diese hohe Wirkstoff-Einlagerung gibt dem Dichtkörper 1 außerordentlich gute Dichteigenschaften. Gleichzeitig werden die Gleiteigenschaften erheblich erhöht, so daß wesentlich geringere Reibungsverluste auftreten.

Ferner ist es zweckmäßig, daß der textile oder geschäumte Werkstoff eine isotrope und ausreichend große Formänderung bei axialer Kompression des Dichtkörpers 1 aufweist, damit eine sichere Dichtwirkung durch den Dichtkörper 1 erreicht wird. Es hat sich außerdem gezeigt, daß die Oberfläche des Dichtkörpers 1, die mit der Welle in Kontakt kommt, keine ausgeprägte Struktur aufweisen darf. Das bedeutet, daß die Unebenheiten dieser Kontaktoberfläche des Dichtkörpers 1 0,1 mm nicht überschreiten sollen. Die Oberfläche der bekannten, bisher verwendeten Geflechte ist dagegen ausgeprägt strukturiert, so daß Erhebungen und Vertiefungen in der Größenordnung von 1 mm vorhanden sind, die abrasiv hochbeansprucht werden. Eine solche Oberfläche läßt sich am besten durch Schneiden der textilen Stoffbahn erzeugen. Es entsteht eine Fläche mit offenen Fasern wie bei einem Velour, die eben, unstrukturiert und sehr homogen ist. Dadurch, daß die Dichtkörper 1 gemäß der Erfindung eine wesentlich ebenere, kaum strukturierte Kontaktfläche aufweisen, ist eine homogene Anlage an der Welle gegeben: der abrasive Verschleiß wird minimiert, und es wird eine wesentlich bessere Dichtwirkung erzielt.

Die Faserauswahl für die textilen Flächengebilde ist abhängig von den Anforderungen, die an die chemische und/oder thermische Beständigkeit des Dichtkörper 1 gestellt werden.

Die aus der Stoffbahn ausgestanzten ringförmigen Scheiben 11, 12, 13, haben in etwa den gleichen Innendurchmesser wie die Welle, die sie abdichten sollen. Vorzugsweise ist jedoch der Innendurchmesser geringfügig größer als der Wellendurchmesser, beispielsweise 0,5 mm. Die so erhaltenen ringförmigen Scheiben 11, 12, 13, werden mit einer PTFE-Dispersion (Polytetrafluoräthylen) getränkt. Die Poren des Materials nehmen den PTFE-Partikelanteil auf, während die Dispersionsflüssigkeit durch das anschließende Trocknen beseitigt wird. Der PTFE-Partikelanteil soll so hoch wie möglich sein, da die Gleiteigenschaften wesentlich davon abhängen. Er soll mindestens 35 Gewichtsprozente, bezogen auf das fertige Dichtungsmaterial, betragen. Bei einer bevorzugten Ausführungsform wurde eine PTFE-Dispersion mit 60 Gewichtsprozenten Feststoffgehalt und einer mittleren Größe des Einzelkorns von 0,1 µ bis 0,5 µ verwendet. Die Imprägnierung der Scheiben 11, 12, 13, kann durch Eintauchen in eine Dispersion erfolgen, bis eine Sättigung erreicht ist, d.h. die Poren des Dichtmaterials keine weitere Dispersion aufnehmen. Die Imprägnierung hat vorwiegend den Zweck, einen Wirkstoff in die Poren des Dichtmaterials einzubringen, der die Reibung zwischen Dichtkörper 1 und Welle vermindert.

Dadurch wird folgendes erreicht:
- Abdichtende Wirkung
- Abstoßende Wirkung gegenüber der Flüssigkeit, die durch den Dichtkörper zurückgehalten werden soll
- Reduzierung der Gleitreibung
- Höhere thermische Belastbarkeit
- Schutz gegenüber abrasiv wirkender Partikel.

Nach dem Imprägnieren erfolgt ein Trocknen der Ringscheiben 11, 12, 13 bei einer Temperatur von etwa 105° C. Die Trockendauer beträgt etwa 2 Stunden, bis die Dispersionsflüssigkeit beseitigt ist.

Um beim ersten Einlaufen von Welle und Dichtkörper 1 eine gute Schmierung zu haben, werden zweckmäßig die getrockneten Ringscheiben 11, 12, 13 noch mit Schmiermittel getränkt. Hierfür kommen je nach Einsatz Silikonöle, Paraphinöl, Mineralöle oder mehrwertige Alkohole in Frage. Bei einer Versuchsausführung wurde beispielsweise Silikonöl mit der Viskosität von 350 mm²/sec. bis 500 mm²/sec. eingesetzt.

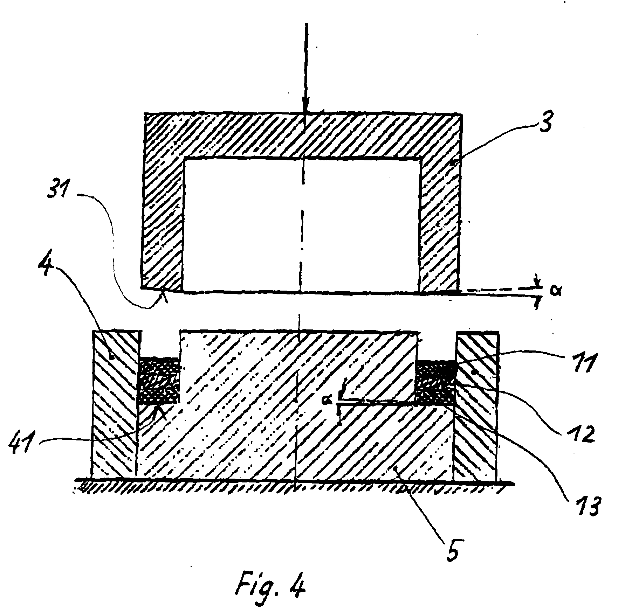

Im Anschluß daran folgt die Herstellung des eigentlichen Dichtkörpers 1, der aus einem oder mehreren Ringen 11, 12, 13 bestehen kann. Die Ringe 11, 12, 13 werden in entsprechender Anzahl übereinander geschichtet und dann auf die gewünschte Höhe h des Dichtkörpers 1 zusammengepreßt und dabei in die entsprechende Form gebracht. Das Pressen hat nicht nur den Zweck, dem Dichtkörper 1 eine gewünschte Form zu geben, sondern auch eine für den Einsatzzweck notwendige Dichte im Dichtkörper 1 zu erzeugen. Hierzu dient eine Preßeinrichtung, wie sie beispielsweise in Fig. 4 gezeigt ist. Diese Preßform besteht aus einer Preßformbüchse 4, in welche der Preßformkern 5 eingesetzt ist. In den Ringspalt zwischen der Preßformbüchse 4 und dem Preßformkern 5 werden die Ringe 11, 12, 13 eingelegt. Mit dem Druckstempel 3 wird dann der Preßvorgang durchgeführt. Um dem Dichtkörper 1 einen trapezförmigen Querschnitt zu geben, ist die Formfläche 31, 41 sowohl am Druckstempel 3 als auch am Preßformkern 5 unter einem Winkel α schräg angeordnet. Die Schräge ist so gewählt, daß bei dem entstehenden Trapez die kürzere Trapezseite an der Welle anliegt. Sowohl die Dichtwirkung, als auch die Reibung zwischen Dichtkörper 1 und Welle wird dadurch günstig beeinflußt.

Für das Pressen der Ringscheiben 11, 12, 13, wird der erforderliche Preßdruck durch den Mediumdruck vorgegeben. Dabei sollte der spezifische Preßdruck nicht kleiner als der Mediumdruck sein.

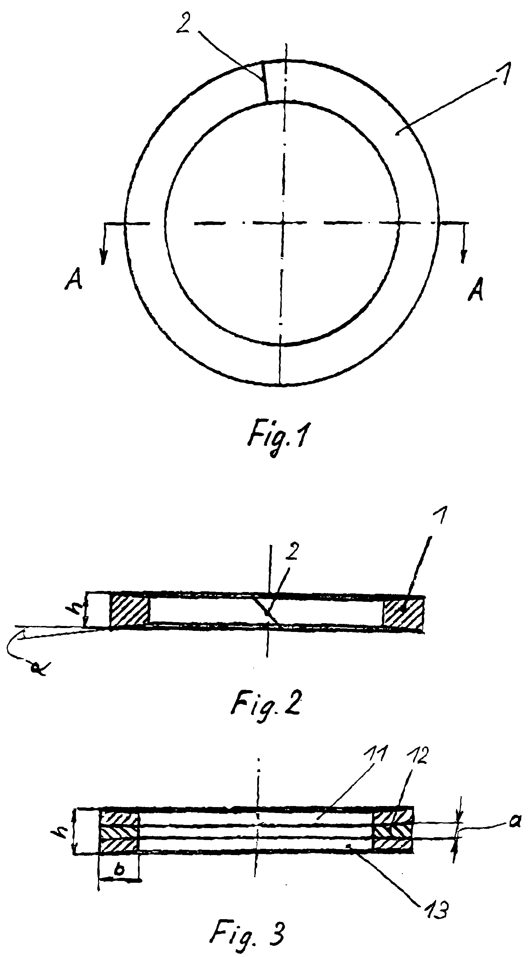

Je nachdem, welche Dicke h des Dichtkörpers 1 gewünscht wird, wird eine Anzahl der Filzringscheiben 11, 12, 13 zusammen in die Preßform eingelegt und gepreßt. Vorzugsweise haben die gepreßten Dichtkörper 1 eine Höhe h, die der Breite b der Ringscheiben 11, 12, 13 entspricht. Je nach Stärke der Stoffbahn besteht der Dichtkörper 1 aus einer gepreßten Ringscheibe 1 - (Fig. 2) oder mehreren Scheiben 11, 12, 13 (Figuren 3 und 4).

Für den leichteren Einbau ist der Dichtkörper 1 schräg (Fig. 2) zu seiner Ringachse des Dichtkörper 1 durchschnitten, so daß der ringförmige Dichtkörper 1 geöffnet und über die Welle geschoben werden kann. Der Schnitt 2 schräg zur Ringachse des Dichtkörpers 1 hat den Vorteil, daß durch den Preßdruck der Brille eine gute Abdichtung an der Schnittstelle erreicht wird.

Im folgenden werden verschiedene Ausführungsbeispiele der erfindungsgemäßen Dichtkörper 1 beschrieben, bei denen auch Messungen durchgeführt wurden. Dabei zeigt sich der überraschend große Vorteil der erfindungsgemäßen Stopfbuchspackungen.

### Beispiele:

1. Dichtkörper (1) aus Nadelfilz 100 % PES (Polyester),
   2870 g/m^2
   Dicke 8,5 mm
   36,2 Gew.% Faseranteil
   63,8 Gew.% PTFE-Partikel
   getränkt mit Silikonöl
2. Dichtkörper (1) aus Nadelfilz 100 % PA (Polyamid),
   1510 g/m^2
   Dicke 3,5 mm
   37,5 Gew.% Faseranteil
   62,5 Gew.% PTFE-Partikel
   getränkt mit Silikonöl
3. Dichtkörper (1) aus Nadelfilz 100 % PTFE
   (PolyTetraFluorEthylen)
   700 g/m^2
   Dicke 1,0 mm
   59,0 Gew.% Faseranteil
   41,0 Gew.% PTFE-Partikel
   getränkt mit Silikonöl
4. Dichtkörper (1) aus Nadelfilz PPS/PTFE-Träger
   (PolyphenylenSulfid/PolyTetraFluorEthylen)
   510 g/m^2 Dicke 1,6 mm
   22,1 Gew.% Faseranteil
   77,9 Gew.% PTFE-Partikel
   getränkt mit Silikonöl

Für die Beurteilung der Dicht- und Gleiteigenschaften wurde die Leckage und die Temperatur der Packung nahe am Wellenumfang sowie das Reibmoment gemessen. Dafür wurde eine spezielle Prüfeinrichtung mit folgenden technischen Daten eingesetzt:

| | |
|---|---|
| Wellendurchmesser | 60 mm |
| Stopfbuchseninnendurchmesser | 80 mm |
| Wellenumfangsgeschwindigkeit | einstellbar bis 4 m/s |
| durchgepumptes Medium | reines Wasser |
| Mediumdruck | einstellbar bis 15 bar |

Die Welle war aus Edelstahl, geschliffen und oberflächengehärtet. Der Packungsraum der Vorrichtung wurde mit dem zu untersuchenden Dichtkörper 1 bestückt.

Der Mediumdruck wurde in 4 Stufen von 2 bar bis 8 bar, bzw. in 7 Stufen von 2 bar bis 15 bar variiert. Der jeweils nötige Brillendruck, bei dem in Verbindung mit einer niedrigen Gleitreibung zwischen Welle und Dichtkörper 1 eine minimale Wellenleckage gewährleistet ist, wurde durch einen pneumatischen Druckzylinder eingestellt und gemessen. Die Temperatur des Dichtkörpers 1 nahe der Welle wurde mit einem Thermoelement kontinuierlich erfaßt.

In der nachstehend aufgeführten Tabelle sind diejenigen Temperaturen und Leckagen der erfindungsgemäß hergestellten Dichtkörper 1 gegenüber handelsüblichen Geflechtspackungen aufgeführt, die sich nach Erreichen des stationären Zustandes während des Laufes einstellten. Die Prüfbedingungen waren für alle geprüften Packungen gleich.

| Art der Packung | Temperatur °C | Reibmoment Nm | Leckage ml/min |
|---|---|---|---|
| Handelsübliche Geflechtspackung aus Aramid PTFE-impr. | 60 - 65 | 1,0 - 1,25 | 2,6 - 3,8 |

| Erfindungsgemäße Filzring- Packung | | | |
|---|---|---|---|
| 1. 100% PES | 41 - 52 | 0,25 - 0.5 | 1,6 - 3,0 |
| 2. 100% PA | 48 - 59 | 0,5 - 0,75 | 1,2 - 2,8 |
| 3. 100% PTFE | 49 - 53 | 0,5 | 1,0 - 2,7 |
| 4. PPS/PTFE | 43 - 44 | 0,5 | 2,5 - 2,8 |

Hieraus ergibt sich, daß das Reibmoment etwa auf ein Viertel bis auf die Hälfte durch die erfindungsgemäßen Dichtkörper 1 abgesenkt wird. Das hat zur Folge, daß auch die Temperatur um 20% bis 25% niedriger liegt. Dennoch wird die Leckage auch beträchtlich abgesenkt, wobei sich hier auch der Einfluß der erfindungsgemäen Konstruktion des Dichtkörpers 1 zeigt. Durch den neuartigen Dichtkörper 1 wird die Welle mehr geschont und abgedichtet als bei herkömmlichen Stopfbuchspackungen. Dies ist offensichtlich darauf zurückzuführen, daß mit diesen Dichtkörpern 1, die eine durch Schnitt der Textil- oder Schaumstoffbahnen erzeugte Fläche gegenüber der Welle aufweisen, eine glatte und homogenere Struktur erreichbar ist.

### Bezugszeichenliste

- 1: Dichtkörper
- 2: Schrägschnitt
- 3: Druckstempel
- 31: Formfläche
- 4: Preßformbuchse
- 41: Formfläche
- 5: Preßformkern
- 11: Dichtscheiben
- 12: Dichtscheiben
- 13: Dichtscheiben
- h: Höhe des Dichtkörpers
- a: Dicke der Ringscheibe Winkel der Formfläche
- b: Breite der Ringscheiben

## Patentansprüche

1. Vorrichtung zum Abdichten bewegter Teile, wie beispielsweise einer Welle, bei welcher das bewegte Teil in einem zwischen einem Gehäuse und dem bewegten Teil gebildeten Ringspalt mit einem mit Wirkstoff getränkten Dichtkörper (1) umgeben und der Ringspalt mit einem Deckel verschlossen ist, mit welchem ein Preßdruck auf den Dichtkörper (1) ausgeübt wird und wobei der Dichtkörper aus einem Material besteht, das eine mit der abzudichtenden Welle in Kontakt kommende Fläche aufweist, **dadurch gekennzeichnet, daß** der Dichtkörper (1) wenigstens aus einer Ringscheibe (11, 12, 13) besteht, die aus kompressiblen Textil- oder offenporigen Schaumstoffbahnen ausgeschnitten ist, so daß die mit der abzudichtenden Welle in Kontakt kommende Fläche eine ebene und unstrukturiert ausgebildete Schnittfläche ist, so daß ein hoher, in der wenigstens einen Ringscheibe eingelagerter PTFE-Anteil zur Wirkung gebracht werden kann.

2. Vorrichtung nach Anspruch 1, **dadurch gekennzeichnet, daß** der Dichtkörper einen Wirkstoffanteil von mindestens 35 % bezogen auf das Gewicht des fertigen Dichtkörpers (1) aufweist, wobei dieser Wirkstoff aus PTFE-Feststoffteilchen besteht.

3. Vorrichtung nach einem der Ansprüche 1 oder 2, **dadurch gekennzeichnet, daß** die Schnittfläche Unebenheiten von maximal 0,1 mm aufweist.

4. Vorrichtung nach einem oder mehreren der Ansprüche 1 bis 3, **dadurch gekennzeichnet, daß** der Porenanteil des Textil- oder Schaumstoffes bezogen auf das Gesamtvolumen wenigstens 50 % beträgt.

5. Vorrichtung nach einem oder mehreren der Ansprüche 1 bis 4, **dadurch gekennzeichnet, daß** der Dichtkörper (1) aus Filz besteht.

6. Vorrichtung nach Anspruch 5, **dadurch gekennzeichnet, daß** der Dichtkörper (1) aus einem Nadelfilz mit einem Flächengewicht von 400 g - 3000 g/qm besteht.

7. Vorrichtung nach einem oder mehreren der Ansprüche 1 bis 4, **dadurch gekennzeichnet, daß** der Dichtkörper (1) aus einem Vliesstoff besteht.

8. Vorrichtung nach einem oder mehreren der Ansprüche 1 bis 4, **dadurch gekennzeichnet, daß** der Dichtkörper (1) aus einem Maschenstoff besteht.

9. Vorrichtung nach einem oder mehreren der Ansprüche 1 bis 4, **dadurch gekennzeichnet, daß** der Dichtkörper (1) aus einem offenzelligen Schaum besteht.

10. Vorrichtung nach einem oder mehreren der Ansprüche 1 bis 9, **dadurch gekennzeichnet, daß** der Dichtkörper (1) mit einem Schmierstoff getränkt ist.

11. Vorrichtung nach Anspruch 10, **dadurch gekennzeichnet, daß** der Dichtkörper (1) vorzugsweise mit Silikonöl getränkt ist.

12. Vorrichtung nach einem oder mehreren der Ansprüche 1 bis 11, **dadurch gekennzeichnet, daß** der Dichtkörper (1) aus Ringscheiben (11, 12, 13) zusammengesetzt ist.

13. Vorrichtung nach einem oder mehreren der Ansprüche 1 bis 12, **dadurch gekennzeichnet, daß** die Dicke (a) der Ringscheiben (11, 12, 13) etwa 1 mm bis 10 mm beträgt, aus denen die jeweils benötigte Stärke (h) des Dichtkörpers (1) zusammengestellt ist.

14. Vorrichtung nach einem oder mehreren der Ansprüche 1 bis 13, **dadurch gekennzeichnet, daß** der Dichtkörper (1) einen trapezförmigen Querschnitt aufweist, wobei die kürzere Trapezseite an dem bewegten Teil anliegt.

15. Vorrichtung nach einem oder mehreren der Ansprüche 1 bis 14, **dadurch gekennzeichnet, daß** daß der Dichtkörper (1) aus mehreren trapezförmigen Körpern zusammengesetzt ist.

16. Vorrichtung nach einem oder mehreren der Ansprüche 1 bis 15, **dadurch gekennzeichnet, daß** die Breite (b) und die Höhe (h) des Querschnitts des Dichtkörpers (1) annähernd gleich sind.

17. Vorrichtung nach einem oder mehreren der Ansprüche 1 bis 16, **dadurch gekennzeichnet, daß** der ringförmige Dichtkörper (1) zum Öffnen für den Einbau durchschnitten ist.

18. Verfahren zur Herstellung von Dichtkörpern (1) zum Abdichten bewegter Teile, wie beispielsweise einer Welle, nach einem oder mehreren der Ansprüche 1 bis 17, **dadurch gekennzeichnet, daß** aus einer Textil- oder Schaumstoffbahn ringförmige Scheiben (11, 12, 13) ausgeschnitten werden, die mit einem als Dispersion aufbereiteten Wirkstoff getränkt und getrocknet werden, worauf die getrockneten Scheiben (11, 12, 13) zu dem gewünschten Dichtkörper (1) zusammengelegt und gepreßt werden.

19. Verfahren nach Anspruch 18, **dadurch gekennzeichnet, daß** die Ringscheiben (11, 12, 13) vor dem Pressen des Dichtkörpers (1) mit Schmiermittel getränkt werden.

20. Verfahren nach Anspruch 19, **dadurch gekennzeichnet, daß** die Ringscheiben (11, 12, 13) nach dem Tränken mit einem Schmierstoff einer Temperaturbehandlung unterzogen werden.

21. Verfahren nach einem oder mehreren der Ansprüche 18 bis 20, **dadurch gekennzeichnet, daß** vor dem Ausschneiden der ringförmigen Scheiben (11, 12, 13) die Textil- oder Schaumstoffbahn mit einer PTFE-Dispersion getränkt und getrocknet wird.

## Claims

1. A device for the sealing of moving parts, such as for example a shaft, with which the moving part is - in an annular clearance formed between a housing and the moving part - surrounded by a sealing body impregnated with an active substance and the annular clearance is closed by a cover by which a compressive pressure is exerted upon the sealing body (1), and the sealing body consisting of a material which has a surface coming into contact with the shaft to be sealed, characterised in that the sealing body (1) consists of at least one annular disc (11, 12, 13) cut out from compressible textile webs or compressible open-pored webs of cellular material, so that the surface coming into contact with the shaft to be sealed is a plane and non-textured cut surface, so that a higher PTFE content embedded in the at least one annular disc can be brought into effect.

2. A device in accordance with Claim 1, characterised in that the sealing body has an active substance content of at least 35 % related to the weight of the finished sealing body (1), this active substance consisting of solid PTFE particles.

3. A device in accordance with one of Claims 1 and 2, characterised in that the extent of unevenness of the cut surface is at most 0.1 mm.

4. A device in accordance with one or more of Claims 1 to 3, characterised in that the pore proportion of the textile or cellular material amounts to at least 50 % related to the total volume.

5. A device in accordance with one or more of Claims 1 to 4, characterised in that the sealing body (1) is made of felt.

6. A device in accordance with Claim 5, characterised in that the sealing body (1) is made of needled felt with an area weight of 400 g - 3000 g/m².

7. A device in accordance with one or more of Claims 1 to 4, characterised in that the sealing body (1) is made of non-woven material.

8. A device in accordance with one or more of Claims 1 to 4, characterised in that the sealing body (1) is made of meshed material.

9. A device in accordance with one or more of Claims 1 to 4, characterised in that the sealing body (1) is made of open-cell foam.

10. A device in accordance with one or more of Claims 1 to 9, characterised in that the sealing body (1) is impregnated with a lubricant.

11. A device in accordance with Claim 10, characterised in that the sealing body (1) is preferably impregnated with silicone oil.

12. A device in accordance with one or more of Claims 1 to 11, characterised in that the sealing body (1) is made up of annular discs (11, 12, 13).

13. A device in accordance with one or more of Claims 1 to 12, characterised in that the thickness (a) of the annular discs (11, 12, 13) is approximately 1 mm to 10 mm, the sealing-body height (h) required at any given time being made up from these annular discs.

14. A device in accordance with one or more of Claims 1 to 13, characterised in that the sealing body (1) has a trapezoidal cross-section, the shorter trapezium side contacting the moving part.

15. A device in accordance with one or more of Claims 1 to 14, characterised in that the sealing body (1) is made up of a plurality of trapezoidal bodies.

16. A device in accordance with one or more of Claims 1 to 15, characterised in that the width (b) and the height (h) of the cross-section of the sealing body (1) are approximately identical.

17. A device in accordance with one or more of Claims 1 to 16, characterised in that the annular sealing body (1) is cut-through for opening thereof for fitting.

18. A method of manufacturing sealing bodies (1) for the sealing of moving parts, such as for example a shaft, in accordance with one or more of Claims 1 to 17, characterised in that annular discs (11, 12, 13) are cut out from a textile web or cellular material web, these annular discs (11, 12, 13) being impregnated with an active substance prepared as a dispersion and being dried, whereupon the dried discs (11, 12, 13) are put together and pressed to form the desired sealing body (1).

19. A method in accordance with Claim 18, characterised in that the annular discs (11, 12, 13) are impregnated with lubricant before the pressing of the sealing body (1).

20. A method in accordance with Claim 19, characterised in that the annular discs (11, 12, 13) are subjected to a temperature treatment after the impregnation with a lubricant.

21. A method in accordance with one or more of Claims 18 to 20, characterised in that before the annular discs (11, 12, 13) are cut out, the textile web or cellular material web is impregnated with a PTFE dispersion and dried.

## Revendications

1. Dispositif pour rendre étanche des pièces mobiles, comme par exemple, un arbre, dans lequel la pièce mobile est placée dans un intervalle annulaire, formé entre un boîtier et la pièce mobile et comportant une garniture (1) d'étanchéité imprégnée de manière active, et dans lequel l'intervalle annulaire est fermé par un couvercle qui exerce une pression d'enfoncement sur la garniture (1) d'étanchéité, et la garniture d'étanchéité étant en un matériau qui a une surface qui vient en contact avec l'arbre à rendre étanche, **caractérisé en ce que** la garniture (1) d'étanchéité est constituée d'une rondelle (11, 12, 13) annulaire qui est découpée dans des bandes de matière alvéolaire compressibles en textile ou à pores ouverts, si bien que la surface venant en contact avec l'arbre à rendre étanche est une surface de coupe plane et réalisée de manière non structurée, si bien qu'une grande proportion de PTFE mis dans la au moins une rondelle annulaire peut être mise en action.

2. Dispositif suivant la revendication 1, **caractérisé en ce que** la garniture d'étanchéité comporte une proportion en matière active d'au moins 35 % rapportée au poids de la garniture (1) d'étanchéité finie, cette substance active étant constituée de particules solides de PTFE.

3. Dispositif suivant l'une des revendications 1 ou 2, **caractérisé en ce que** la surface de coupe comporte des inégalités au maximum de 0,1 mm.

4. Dispositif suivant l'une ou plusieurs des revendications 1 à 3, **caractérisé en ce que** la proportion de pores de la matière textile ou de la matière alvéolaire est d'au moins 50 % rapportée au volume total.

5. Dispositif suivant l'une ou plusieurs des revendications 1 à 4, **caractérisé en ce que** la garniture (1) d'étanchéité est en feutre.

6. Dispositif suivant la revendication 5, **caractérisé en ce que** la garniture (1) d'étanchéité est constituée de feutre aiguilleté ayant un poids par unité de surface de 400 à 3000 g/m².

7. Dispositif suivant l'une ou plusieurs des revendications 1 à 4, **caractérisé en ce que** la garniture (1) d'étanchéité est en un tissu non tissé.

8. Dispositif suivant l'une ou plusieurs des revendications 1 à 4, **caractérisé en ce que** la garniture (1) d'étanchéité est en un matériau à maille.

9. Dispositif suivant l'une ou plusieurs des revendications 1 à 4, **caractérisé en ce que** la garniture (1) d'étanchéité est en une mousse à alvéoles ouvertes.

10. Dispositif suivant l'une ou plusieurs des revendications 1 à 9, **caractérisé en ce que** la garniture (1) d'étanchéité est imprégnée d'un lubrifiant.

11. Dispositif suivant la revendication 10, **caractérisé en ce que** la garniture (1) d'étanchéité est imprégnée de préférence d'huile de silicone.

12. Dispositif suivant l'une ou plusieurs des revendications 1 à 11, **caractérisé en ce que** la garniture (1) d'étanchéité est composée de rondelles (11, 12, 13) annulaires.

13. Dispositif suivant l'une ou plusieurs des revendications 1 à 12, **caractérisé en ce que** l'épaisseur (a) des rondelles (11, 12, 13) annulaires est d'environ 1 mm à 10 mm, l'épaisseur (h) de la garniture d'étanchéité dont on a besoin étant obtenue par leur réunion.

14. Dispositif suivant l'une ou plusieurs des revendications 1 à 13, **caractérisé en ce que** la garniture (1) d'étanchéité a une section transversale trapézoïdale, le côté le plus petit du trapèze s'appliquant à la pièce mobile.

15. Dispositif suivant l'une ou plusieurs des revendications 1 à 14, **caractérisé en ce que** la garniture (1) d'étanchéité est composée de plusieurs éléments trapézoïdaux.

16. Dispositif suivant l'une ou plusieurs des revendications 1 à 15, **caractérisé en ce que** la largeur (b) et la hauteur (h) de la section transversale de la garniture (1) d'étanchéité sont à peu près égales.

17. Dispositif suivant l'une ou plusieurs des revendications 1 à 16, **caractérisé en ce que** la garniture (1) d'étanchéité annulaire est fendue en vue de l'ouvrir pour le montage.

18. Procédé de fabrication de garnitures (1) d'étanchéité pour rendre étanche des pièces mobiles, comme par exemple un arbre, suivant l'une ou plusieurs des revendications 1 à 17, **caractérisé en ce que** l'on découpe dans une bande textile ou dans une bande de matière alvéolaire des rondelles (11, 12, 13) annulaires qui sont imprégnées d'une matière active préparée sous forme d'une dispersion et séchées, après quoi les rondelles (11, 12, 13) séchées sont assemblées et pressées pour former la garniture (1) d'étanchéité souhaitée.

19. Procédé suivant la revendication 18, **caractérisé en ce que** les rondelles (11, 12, 13) annulaires sont imprégnées d'agent lubrifiant avant le pressage de la garniture (1) d'étanchéité.

20. Procédé suivant la revendication 19, **caractérisé en ce que** les rondelles (11, 12, 13) annulaires sont soumises après l'imprégnation par une matière lubrifiante à un traitement en température.

21. Procédé suivant l'une ou plusieurs des revendications 18 à 20, **caractérisé en ce que** la bande de matière textile ou la bande de matière alvéolaire est, avant le découpage des rondelles (11, 12, 13) annulaires, imprégnée d'une dispersion de PTFE et séchée.
